# EUROPEAN PATENT SPECIFICATION

(11) **EP 1 209 572 B1**
(45) Date of publication and mention of the grant of the patent: **20.12.2006**
(21) Application number: 01917507.4
(22) Date of filing: 27.03.2001
(51) Int. Cl.: G06F 13/00, G06F 15/00, G06F 12/14

(54) **NETWORK SECURITY SYSTEM**
NETZWERKSICHERHEITSSYSTEM
SYSTEME DE SECURITE DE RESEAU

(30) Priority: 29.03.2000 JP 2000092496
(43) Date of publication of application: 29.05.2002
(73) Proprietor: SEIKO EPSON CORPORATION, Shinjuku-ku, Tokyo 163-0811 (JP)
(72) Inventor: GOTO, Eriko, Suwa-shi, Nagano 392-8502 (JP); OSHIMA, Yasuhiro, Suwa-shi, Nagano 392-8502 (JP); SHIBUSAWA, Yasuo, Suwa-shi, Nagano 392-8502 (JP)
(74) Representative: Sturt, Clifford Mark
(86) International application number: PCT/JP2001/002515
(87) International publication number: WO 2001/073559

(56) References cited:
- WO-A-98/56024
- CA-A1- 2 212 151
- JP-A- 5 081 116
- JP-A- 7 200 433
- JP-A- 9 319 635
- JP-A- 9 331 314
- JP-A- 10 334 008
- JP-A- 10 336 229
- JP-A- 2000 047 955
- US-A- 5 911 776
- ZHONG Q ET AL: "SECURITY CONTROL FOR COTS COMPONENTS" COMPUTER, IEEE COMPUTER SOCIETY, LONG BEACH., CA, US, US, vol. 31, no. 6, June 1998 (1998-06), pages 67-73, XP000780537 ISSN: 0018-9162
- PATENT ABSTRACTS OF JAPAN vol. 1998, no. 10, 31 August 1998 (1998-08-31) & JP 10 145493 A (MATSUSHITA ELECTRIC IND CO LTD), 29 May 1998 (1998-05-29)

## Description

### [Industrial Applications]

The present invention is related to a network security system to protect an internal system which sends and receives data through a network from the network.

### [Background technology]

In a system such as one for the sale of goods in use in such networks as the Internet, sales administration such as one which arranges goods and delivers it are conducted by obtaining order information through the network and writing the information to a database. In such a system, in case the order information is damaged through the acquisition of fraudulent data from the network, order obtaining activity is suspended, and extreme damage may occur. Also in the case where customer information is stolen through the network by a fraudulent means, significant credit problems occur. Therefore, a security system, known as a firewall, is placed between the network and the internal system to prevent the invasion of hackers and the like.

In the prior art of technology described above, the following problems must be overcome.

A firewall requires identification information and security code and the like and authentication to ensure the right to access for those about to access the Internal system through the network.(Japanese Patent publications 11-298639, and 10-214304). However, it is not easy to protect against hackers who obtain identification information and security code by fraudulent means and camouflage. Moreover, in the ways to obtain the order information from general run of users and take them into the database such as the system of order and sales of goods, a system is necessary to assure the elimination of fraudulent data about to become mixed with the order information. Also, a system is necessary to assuredly eliminate actions for fraudulently reading the contents of the database.

PCT patent application WO 98/56024, published on 10th December 1998, describes a method for handling electronic messages between different computer networks and application programs by providing a message agent server system and a message format library system. The message agent server system routes messages from application programs to external networks and external messaging systems. The message format library system includes message functions for formatting, translating, validating, reconciling, and/or parsing. One version of the method is applicable to a network, which includes a message agent server, a first terminal for communicating electronic message in a first format, and a secure network, the secure network being further connectable to at least a second terminal for communicating electronic messages in a secure network format. The method then involves generating an electronic message at the first terminal in the first format; transmitting the message from the first terminal to the message agent server; translating, via the message agent server, the message from the first format to the secure network format; and transmitting the translated message from the message agent server to the second terminal. The method finds particular application in a financial environment, where it facilitates the communication of electronic messages by converting messages from a format used by a financial institution's network to the Society for Worldwide Interbank Financial Telecommunication (SWIFT) format.

### [Description of the invention]

In accordance with the invention there is provided a network security system as defined in claim 1.

Embodiments of the invention are set forth in the dependent claims.

### [Brief explanation of drawings]

Fig.1 is a block diagram showing the example of the system related to the present invention.
Fig.2 is an explanation drawing to explain the actions of the process that data the server received are converted and stored in the received process data means.
Fig3 is a flow chart of the actions with the server and the received process data storage.
Fig.4 is a block diagram indicating the example using the present invention to the system for the sending process.
Fig.5 is a block diagram of the system further reinforcing the security function.
Fig.6 is another system of block diagram reinforcing the security function by use of mail sending.

### [Embodiment]

As follows, embodiments related to the present invention are explained with the use of examples.

### <Receiving process>

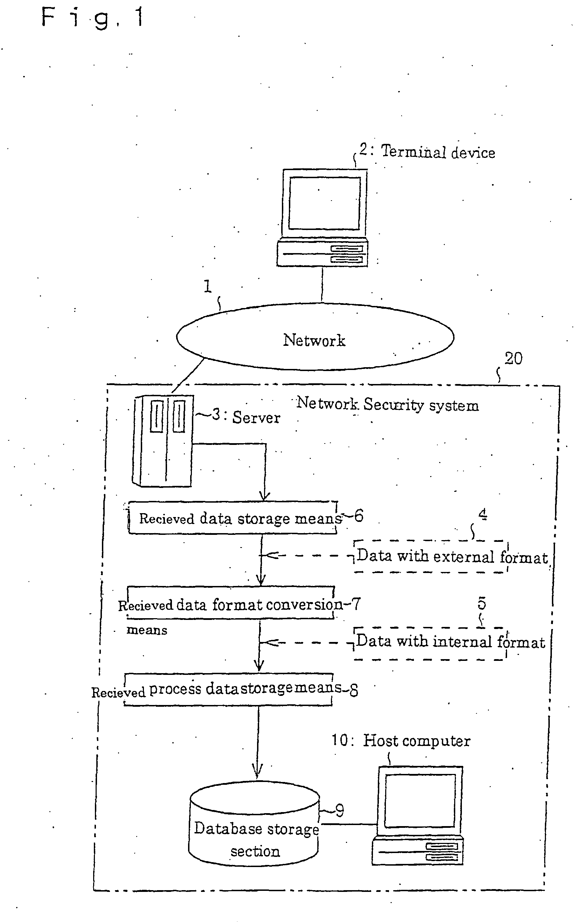

Fig.1 is a block diagram showing an example of the system of the present invention.

As shown in the figure, the various terminal devices 2 which users utilize are connected to the network 1. A system for providing information for purchasing goods, for instance, is connected to the network 1. This system constitutes the network security system 20 to reinforce the protection function by the present invention. The network security system 20 comprises a server 3, received data storage means 6, received data format conversion means7, received process data storage means 8 and a host computer 10.

The server 3 is connected to the network 1. Inside of the server 3, a storage device, not shown, to store the information to provide to users is installed. This network is preferably applied to the Internet, but can be applied to all other networks other than the internet, such as a telephone network specifying users, and an intranet. When an order is place by a user, the server 3 receives the order information through the network 1. The host computer 10 is placed to process the order information and to arrange and administrate goods. The received data storage means 6, the received data format conversion means 7 and the received process data storage means 8 transfer the order information received by the server to the host computer 10. The host computer 10 stores the order information in the database storage section 9 from the received process data storage means 8 and administrates the orders.

The received data storage means 6 comprises a storage device for storing the data with an external format 4 which the server 3 receives through the network. The data with an external format 4 is what is received from other terminal devices through the network, whose format is an optional format such as an e- mail format and a data file format. Also data with a text type of format, or data with a binary type of format is applicable. The received data format conversion means 7 has the function of reading data with an external format 4 from the received data storage means 6, to convert it to the data with the internal format 5 in a fixed procedure, and then to write it in the received process data storage means 8. The received data format conversion means 7 should be preferably implemented by computer programming, but can be implemented by hardware. Conversion of data format can be arranged optionally including extraction, sorting, partial delete, data addition, and the like. The received data format conversion means 7 has the effect of filtering fraudulent data contained in the received data as the received data format conversion means 7 does not transfer data simply.

The format of the data with the internal format 5 is optional as well, but the data has a fixed format pre-regulated on the host computer side. In this example, data with a CSV format is applied, because with the CSV format it is easy to update the database stored in the database storage section 9. Data with the CSV format are data with a text type format. The received data format conversion means 7 analyses data with an external format the server 3 received, extracts the necessary data items and generates data with the internal format. The received process data storage means 8 is a storage device to store fixed amounts of data with the internal format 5 and hold them until the data with the internal format 5 is written in the database storage section 9.

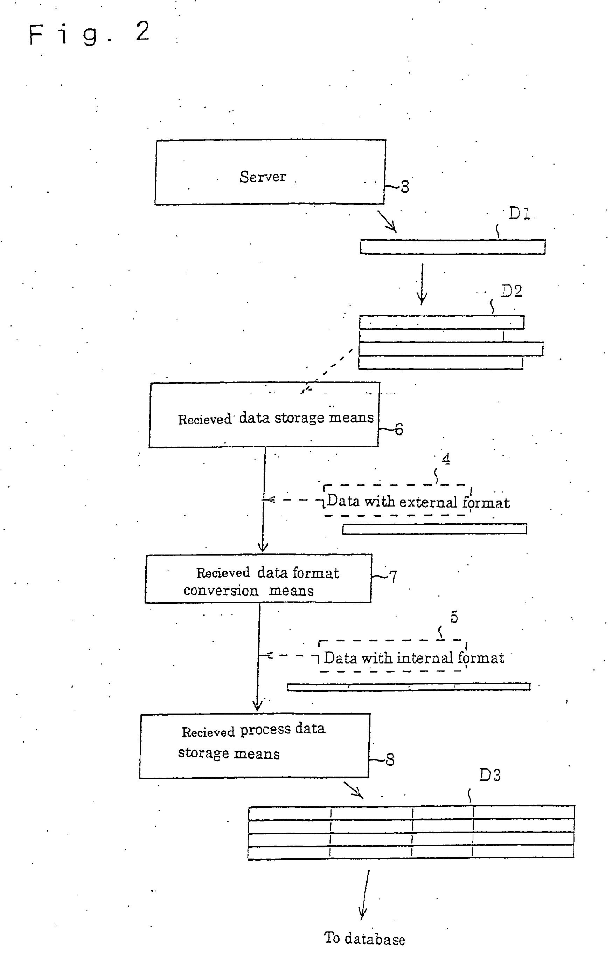

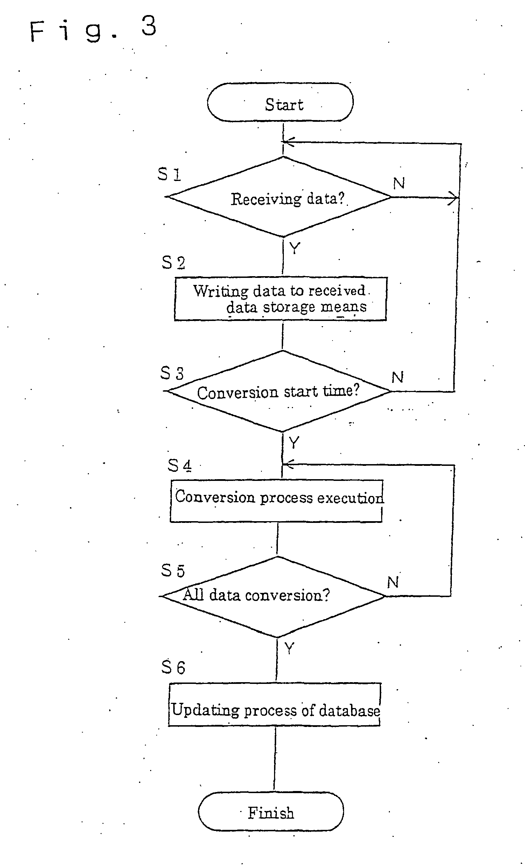

Fig 2 is an explanatory drawing to explain the action in which data the server received is converted into the data being stored in the received process data storage means. Fig. 3 is a flow chart of the actions with the server and the received process data storage means, and the like.

The actions are explained hereafter, with reference to the drawings. First, the server writes data D1 received from the network 1 in order in the received data storage means 6 (Fig.3 step S1, step S2). Data D2 accumulated in the received data storage means 6 is read out by the received data format conversion means 7 at fixed intervals, and undergoes the conversion process to the data with the internal format 5 from the data with an external format 4 (Fig. 3 step S3, step S4).

For instance, in case of administration of ordering data, this conversion process is set up to be executed once during night each day, twice a day, or every other hour. Therefore, the received data format conversion means 7 should monitor the system timer and commence the action when the time for conversion starting is up.

In the case of administration of ordering, data with mail format containing data on user codes, ordered goods codes, quantity to be ordered, and the like are stored in the received data storage means. If data indicating the location of the user code, for instance, is contained in the data with an external format, the data can be detected and cut off. And only the portion of the user code can be extracted. At this time, as the other parts than the user code and necessary data are cut off and thrown away automatically, obtaining fraudulent data can be prevented. When obtaining data, if a format with the data is inspected, obtaining camouflaged data can be prevented. The received data format conversion means 7 extracts the necessary data items in this manner, and generates a text format of data separated, for instance, by commas. This data is written in the received process data storage means 8.

When the conversion process of all data D2 stored in the received data storage means is finished, the program goes to step S6 from step S5 in Fig. 3 and the updating process of the database is executed. Data D3 stored in the received process data storage means 8 are written in the database as they are. In case the data D3 are data with CSV format stated above, they can be taken into the database as they are and used for organizing received orders.

In the example above, after the conversion process of data with an external format 4 to data with the internal format 5 by the received data format conversion means 7, the storage process of this data with the internal format for addition to the database on the host computer side are executed. However, these processes should be executed independently for the convenience of system operation. The conversion process by the received data format conversion means 7 is preferably executed when data with an external format is accumulated in some amount or when access to the server is not so busy.

The server usually writes the received data in the received data storage means with one piece of data. What is meant by composite execution is to be processed not for each piece of data but a composite of numerical number of data, as with a batch process. What is meant by execution with independent timing is the independent activation control of each process.. There is no problem, of course, if controlling the activation timing is intended, for instance, in a manner in which an additional storage process initiates to the database of the host computer side automatically when the conversion process of the received data format conversion means is terminated.

The received data format conversion means 7 is not just an interface between the server and the host computer. It has the function of a filter for one-way flow to extract and fabricate only the necessary data from data with an external format which might contain fraudulent data, and to convert them to data with preestablished, safe, internal format. Data with an external format the sever 3 received through the network 1 shown in Fig. 1 is written into the received data storage means 6. The host computer 10 does not make direct access to this received data storage means 6. That is why the host computer 10 can be prevented from obtaining fraudulent data from the network 1.

In Fig. 1, the received data storage means 6 can be a storage device set up to be independent from the server 3, or can be part of the storage device arranged inside of the server or the host computer 10. The received process data format conversion means 8 as well can be a storage device set up independently from the server or the host computer 10, or can be part of the storage device arranged in the inside of the host computer. The received data format conversion means 7 can be a computer program working on the server 3 or a computer program working on the host computer 10.

Furthermore, the received data storage means 6 could allow data with an external format the server 3 received to be written, but should prevent all data from being read out by the server 3. This can be implemented, for instance, by a well known function of the operation system. Or as explained later, the server 3 should transfer data with a mail format to the received data storage means 6. This can prevent data in the received data storage means 7 from being read out from the network side. The received process data storage means 8 could allow data with the internal format to be read out by the host computer 10, but should prevent all data from being written by the host computer 10.

Working of the received data format conversion means 7 can be limited as well.

Namely the received data storage means 6 allows data with an external format to be read out by the received data format conversion means 7, while preventing all data from being written by the received data format conversion means 7. The received process data storage 8 allows data with the internal format to be written by the received data format conversion means 7, while preventing all data from being read out by the received data format conversion means 7. As stated above, it is feasible to effectively protect the internal system from hackers by arranging several barriers with one way flow.

### <Sending process>

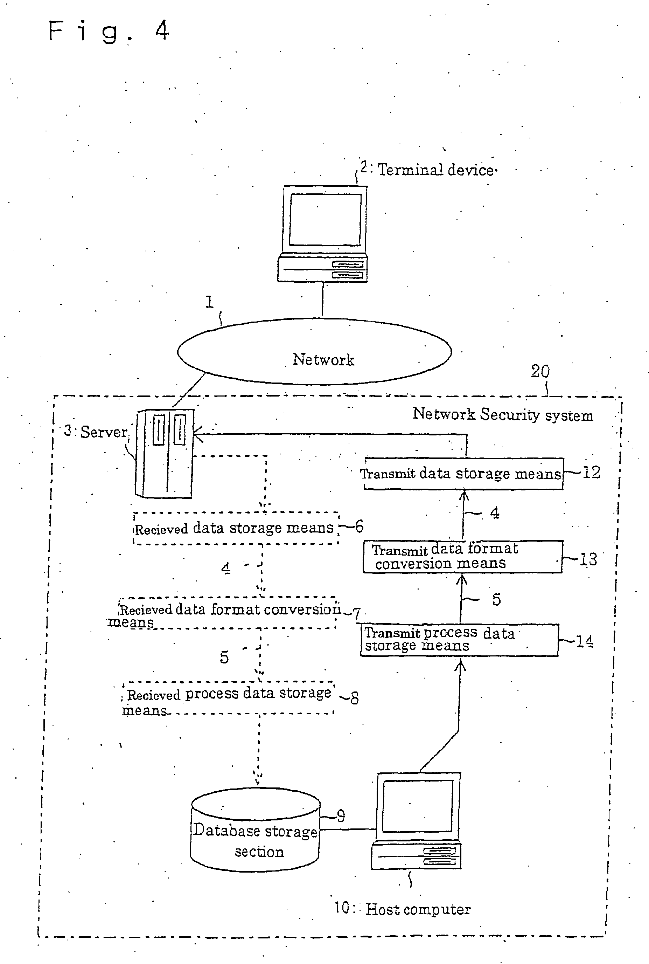

Fig.4 is a block diagram showing the example of a system for sending process. The system shown in Fig.1 takes data received through the network into the database processed by the host computer safely. This can apply to the case of sending data from a host computer to a network. Fig.4 is one such example. The blocks the system in Fig. I comprises are denoted with a dashed line for purposes of distinction.

In the system in Fig.4, the host computer 10 has the transmit data storage means 12, the transmit data format conversion means 13 and the transmit process data storage means 14. The rest is the same as the system in Fig. 1. The host computer 10 executes ordering administration and the like in the use of the database storage section 9. The transmit process data storage means 14 is a storage device to store data with the internal format which the host computer generates and sends to the network. The transmit data format conversion means 13 has a function to convert data with the internal format stored in the transmit process data storage means 14 to data with an external format and to create the data stored in the transmit data storage means 12. This, as well as the example in Fig. 1, comprises the computer program and the like. The server 3 has a function to send data with an external format stored in the transmit data storage means to the network. The content and format of data with an external format and internal format is the same as the example in Fig. 1.

In this system, if the host computer 10 has data to be sent through the network, the host computer converts this to the data with the internal format with selective timing and makes it stored in the transmit process data storage means 14. The transmit data format conversion means 13 is, for instance, activated in each case by the host computer, and reads out data with the internal format from the transmit process data storage means 14 and converts it to data with an external format. And then, it writes it to the transmit data storage means 12. This action is different from the case of data received in Fig. 1. As the transmit data format conversion means 13 can acquire information on emergency of sending data from the host computer, the timing of sending data should be classified.

After data are written in the transmit data storage means 12, the server should conduct a sending process to the network with emergency of data sending considered, as well. In this example also, the transmit process data storage means 14 allows data with the internal format to be written by the host computer, and should prevent data from being read out by the host computer. The transmit data storage means 12 preferably allows data with an external format sent by the server to be read out, and prevents data from being written by the server 3.

Furthermore, the transmit process data storage means 14 preferably allows data with the internal format to be read out by the transmit data format conversion means 13, while preventing data from being written by the transmit data format conversion means 13. The transmit data storage means 12 preferably allows data with an external format the server sends to be written by the transmit data format conversion means 13, while preventing data from being read out by the received data format conversion means 13. As stated above, it is feasible to prevent hackers from stealing data by arranging several barriers with one way flow to the network.

The conversion process of data with the internal format to data with an external format by the transmit data format conversion means 13 can be executed with independent timing from the storage process of data with the internal format to the transmit process data storage means 14 by the host computer 10. The system combining the system to receive data indicated in Fig.1 and the system to send data indicated in Fig. 4 can present extremely high security as far as received and transmit data is concerned. It is preferable that the conversion process by the received data format conversion means 7 shown in Fig.4, the additional storage process of data with the internal format to the database of the host computer 10 side, the storage process of data to the transmit process data storage means 14 by the host computer 10 and the conversion process by the transmit data format conversion means 13 each are preferably executed with independent timing.

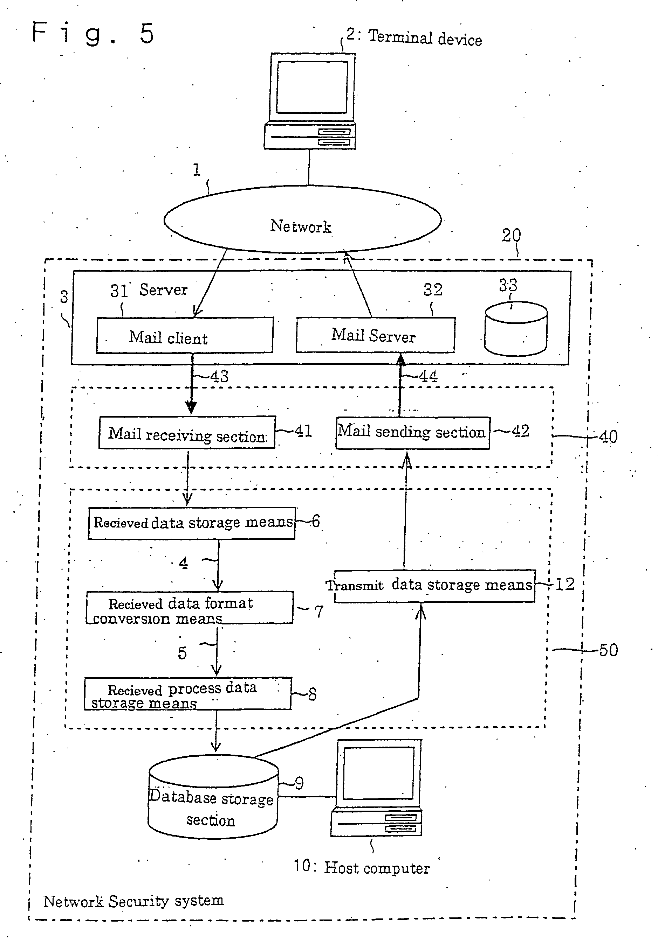

Fig.5 is a block diagram to more greatly reinforce the security function of the system.

Usually, a specified region in the storage device of a computer can be controlled with only reading out, and the rest of region in the storage device can be controlled with both reading out and writing being prevented. However, it is not easy to prevent hackers from invading the system completely by a fraudulent means as this kind of control is accomplished by software. For instance, if each function block shown in the system of Fig.1 is brought into practice using a single computer, it would be the same as if the received data storage means 6, the received process data storage means 8, the transmit data storage means 12 and the transmit process data storage means 14 were all located on one memory. The server 3 and the host computer 10 could be connected directly by LAN (Local Area Network) and share a storage device. In such a case, it would not be easy to prevent fraudulent access completely to the received process data storage means 8 and the transmit process data storage means 14, which should be protected on the host computer side.

Therefore, in this example, a mail system which can transfer only with a fixed format, is used to connect between the server and the host computer.

The server in the Figure has the mail client 31, the storage device 33 and the mail server 32. Also, the mail transfer section 40 has the mail receiving section 41 and the mail sending section 42. Further the data conversion section 50 has the received data storage means 6, the received data format conversion means 7, the received process data storage means 8 and the transmit data storage means 12. In the example, the function of the mail transfer section 40 stated above controls a way to transfer data in the sever 3 and the data transfer of the host computer side to reinforce the security of the host computer side. If the data transfer section 50 is arranged with the mail transfer section 40, it could secure higher security of the system.

The mail receiving section 41 of the mail transfer section 40 is a device to have a mail receiving function, and the mail sending section 42 is a device to have a mail sending function. These mail transfer section 40 and the server 3 are preferably connected only with cables for mail receiving and sending 43, 44. Data transfer between the server 3 and the mail transfer section 40 are not executed without a fixed mail format under this configuration. For instance, if data format transferred with this mail is limited with a text format of data, it would not occur that fraudulent commands and program are transferred between the server 3 and the mail transfer section 40.

The system described above works as follows.

In the storage device 33 of the server 3, for instance, web page data such as a home page to sell goods through the network 1 such as the internet are stored. The mail client 31 sends data to place order for goods to the mail receiving section 41 of the mail transfer section 40 with a mail format, when the mail client receives it from users with the terminal device 2 through the network. The mail receiving section 41 has the received mail to be stored in the received data storage means 6.

As has been explained, in the following process, the data is taken in the database 9 after the conversion of data format. The data conversion section 50 can comprise a means to convert the data format to the database format and write database 9 directly.

On the other hand, in the case of an order being placed, the host computer generates a comment telling us "Receiving an order" and delivery information including a shipping date. This comment and information are stored in the transmit data storage means 12. The mail sending section 42 sends this comment and information to the mail server 32 after this comment and information are converted to data with mail format. The mail server 32 sends the data to the network.

In other words, the mail client 31 sends data with the mail format to the mail receiving section 41, but does not have a function to receive mails. The mail server 32 receives mails from the mail sending section 42 but does not have a function to send mails. A dedicated communication line for transferring should be used to make connection between the server 3 and the mail transfer section 40. By this way, the server 3 and the mail transfer section 40 can be constituted separately from a hardware point of view. The communication line is preferably one which does not have a invading route of other data, to enhance the security more. As only data with mail format, not data with the other format is transferred, there is no way that fraudulent commands or data are taken in the host computer and the like. Therefore, this communication line is one-way data transfer path with reliability. This will provide the function of high protection to the system requiring high security.

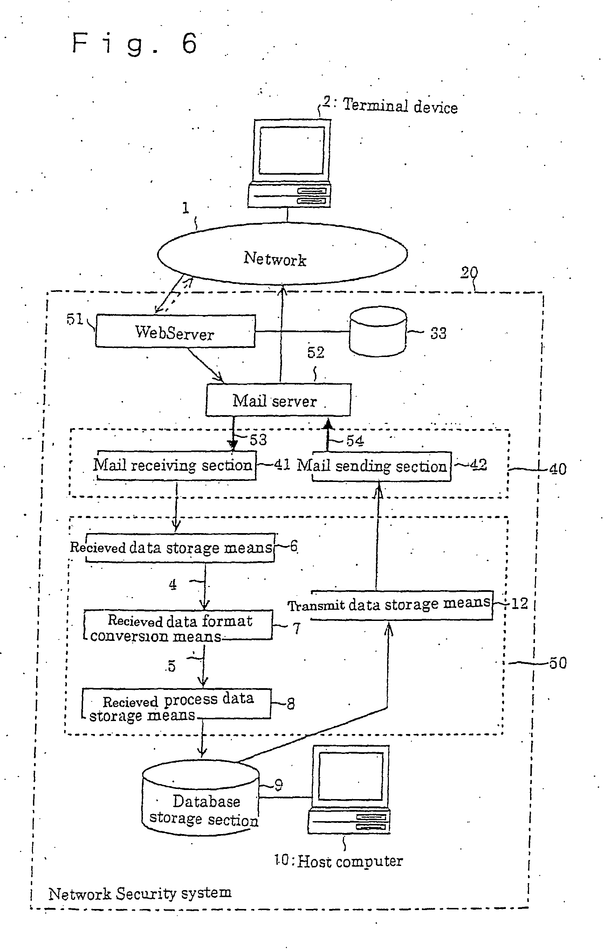

Fig. 6 is a block diagram with another system to reinforce the security by use of mail transfer. In the example of this figure, web server 51 of the system 20 is connected to the network 1 and makes communication with the network 1. This web server 51 is connected to the mail server 52. The mail server 52 is connected to the mail receiving section 41 of the mail transfer section 40 through the mail dedicated line 53. And the mail server 52 is connected to the mail sending section 42 of the mail transfer section 40 through the mail dedicated line 54. The portion below the mail transfer section 40 to the host computer is the same as Fig. 5. This system is ensured to have enough high security whether the mail transfer section 40 is connected to the host computer directly or the mail transfer section 40 is a part of the host computer 10.

The mail-dedicated lines 53, 54 above, are used only for transfer of mail between the mail server 52 and the mail transfer section 40. These lines cannot transfer data with any format but a specified one, as these lines are used only for mail transfer. Therefore, illegal invasion from the network side to the host computer side can be assuredly prevented. It will not happen that data are sent out from the host computer to the network carelessly. The dedicated lines 53, 54, can be made up of a separate cable for upward and downward as in the figure or can be made of one cable capable of transferring mail in both directions. Also in this example, for convenience of the explanation above, arrows are indicated for data to be transferred only in one direction from the network 1 to the web server 51. But communication between the network 1 and the web server 51 can be made in both directions.

In the system stated above, when data to place orders for goods from the terminal 2 is sent to the network 1, web server 51 receives it. The web server 51 sends the received data to the mail server 52. The mail server 52 sends the data to the mail receiving section 41 through the dedicated line 53 with mail format. On the other hand, mails sent from the host computer 10 are transferred to the mail server 52 through the dedicated line 54 from the mail sending section 42. The mail server 52 sends the mail to the terminal device 2 through the network 1 by use of its own function of mail receiving. The rest of the parts are the same as has been already explained, and a superfluous explanation is omitted. In this manner, the mail transfer by use of the dedicated lines 53, 54 can provide protection and reinforcement of the internal system from the network.

Each function block indicated in each figure can comprise a separate program module, or can be composed of an integrated program module. The whole or part of these function blocks can comprise hardware in the form of a logical circuit. Each program module can be operated by installation into an existing application program, or can be operated as an independent program.

## Claims

1. A network security system comprising:
a server (3) connected to a network (1);
a received-data storage means (6) for storing data, which are received by the server (3) through the network (1), the data having an external format;
a received-data format-conversion means (7) for converting said data with an external format stored in the received-data storage means (6) to data with an internal format, and for storing them in a received-process data storage means (8); and
a host computer (10) for executing a predetermined process, which utilizes data stored in the received-process data storage means (8) and having the internal format,
the system being **characterized in that**:
the received-data storage means (6) is adapted to be written into with data, which the server (3) has received and which have the external format, while adapted to prevent data from being read out of the received-data storage means (6) by the server (3);
the received-process data-storage means (8) is adapted to allow the host computer (10) to read data, which have the internal format, out of the received-process data-storage means (8), while adapted to prevent data from being written into the received-process data-storage means (8) by the host computer (10); and
the received-data format-conversion means (7) is adapted to convert data, which have the external format, to data having a database format.

2. The network security system according to claim 1, wherein the system is arranged such that:
the received-data storage means (6) is adapted to allow data having the external format to be read out of the received-data storage means (6) by the received-data format-conversion means (7), while adapted to prevent data from being written into the received-data storage means (7) by the received-data format-conversion means (7), and
the received-process data-storage means (8) is adapted to allow data having the internal format to be written into the received-process data-storage means (8) by the received-data format-conversion means (7), while adapted to data from being read out of the received-process data-storage means (8) by the received-data format-conversion means (7).

3. The network security system according to claim 1 or claim 2, wherein the received-process data-storage means (8) is adapted to store data having the internal format additionally with a predetermined period of time into a database (9) of the host computer (10).

4. The network security system according to claim 3, wherein the system is adapted to execute the conversion, by the received-data format conversion means (7), of data with the external format to data with the internal format, and the additional storing of the data with the internal format into the database (9) of the host computer (10), with independent timing and in a batch-processing manner.

5. The network security system according to claim 1 or claim 2, wherein the server (3) is adapted to send data having a mail format to the received-data storage means (6) and to write data with the external format.

6. The network security system according to claim 1, further comprising:
a transmit-process data-storage means (14) for storing data sent to the network (1);
a transmit-data format-conversion means (13) for converting data with the internal format stored in the transmit-process data-storage means (14) to data with the external format and for storing it into transmit-data storage means (12); wherein
said server (3) is adapted to send data, which have the external format and are stored in the transmit-data storage means (12), to the network (1).

7. The network security system according to claim 6, wherein:
the transmit-process data-storage means (14) is adapted to allow data having the internal format to be written into the transmit-process data-storage means (14) by the host computer (10), while adapted to prevent data from being read out of the transmit-process data-storage means (14) by the host computer (10), and
the transmit-data storage means (12) is adapted to allow data, which the server (3) is arranged to send and which have the external format, to be read out of the transmit-data storage means (12), while adapted to prevent data from being written into the transmit-data storage means (12) by the server (3).

8. The network security system according to claim 6 or claim 7, wherein:
the transmit-process data-storage means (14) is adapted to allow data having the internal format to be read out of the transmit-process data-storage means (14) by the transmit-data format-conversion means (13), while adapted to prevent data from being written into the transmit-process data-storage means (14) by the transmit-data format-conversion means (13), and
the transmit-data storage means (12) is adapted to allow data having the external format to be written into the transmit-data storage means (12) by the transmit-data format-conversion means (13), while adapted to prevent data from being read out of the transmit-data storage means (12) by the transmit-data format-conversion means (13).

9. The network security system according to any one of claims 6 to 8, wherein the system is adapted to execute the conversion, by the transmit-data format-conversion means (13), of data having the internal format to data having the external format, and the storing, by the host computer (10), of data having the internal format into the transmit-process data-storage means (14), with independent timing.

10. The network security system according to any one of claims 6 to 8, wherein the server (3) is adapted to receive data having a mail format from the transmit-data storage means (12) and to send it to the network (1).

11. The network security system according to any one of claims 6 to 8, wherein
a database (9) is associated with the host computer (10), and
the system is adapted such that:
the conversion, by the received-data format-conversion means (7), of data having the external format to data having the internal format, the additional storing of the data having the internal format in the database (9), the conversion, by the transmit-data format-conversion means (13), of data having the internal format to data having the external format, and the storing of data having the internal format in the transmit-process data-storage means (14) by the host computer (10), are each executed with independent timing.

12. The network security system according to any one of the preceding claims, wherein the network (1) is the Internet.

## Patentansprüche

1. Netzwerksicherheitssystem, umfassend:
einen Server (3), der mit einem Netzwerk (1) verbunden ist;
ein Empfangsdatenspeichermittel (6), um Daten, die vom Server (3) über das Netzwerk (1) empfangen werden, zu speichern, wobei die Daten ein externes Format aufweisen;
ein Empfangsdatenformatumwandlungsmittel (7), um diese Daten mit einem externen Format, die im Empfangsdatenspeichermittel (6) gespeichert sind, in Daten mit einem internen Format umzuwandeln und sie in ein Empfangsprozessdatenspeichermittel (8) zu speichern; und
einen Hostrechner (10), um einen vorbestimmten Prozess auszuführen, der Daten benutzt, die im Empfangsprozessdatenspeichermittel (8) gespeichert sind und das interne Format aufweisen,
wobei das System **dadurch gekennzeichnet ist, dass**:
das Empfangsdatenspeichermittel (6) geeignet ist, mit Daten beschrieben zu werden, die der Server (3) empfangen hat und das externe Format aufweisen, während es geeignet ist, das Auslesen von Daten aus dem Empfangsdatenspeichermittel (6) durch den Server (3) zu verhindern;
das Empfangsprozessdatenspeichermittel (8) geeignet ist, dem Hostrechner (10) das Lesen von Daten, die das interne Format aufweisen, aus dem Empfangsprozessdatenspeichermittel (8) zu erlauben, während es geeignet ist, das Schreiben von Daten durch den Hostrechner (10) in das Empfangsprozessdatenspeichermittel (8) zu verhindern; und
das Empfangsdatenformatumwandlungsmittel (7) geeignet ist, Daten, die das externe Format aufweisen, in Daten umzuwandeln, die ein Datenbankformat aufweisen.

2. Netzwerksicherheitssystem nach Anspruch 1, wobei das System so angeordnet ist, dass:
das Empfangsdatenspeichermittel (6) geeignet ist, dem Empfangsdatenformatumwandlungsmittel (7) das Auslesen von Daten, die das externe Format aufweisen, aus dem Empfangsdatenspeichermittel (6) zu erlauben, während es geeignet ist, das Schreiben von Daten durch das Empfangsdatenformatumwandlungsmittel (7) in das Empfangsdatenspeichermittel (6) zu verhindern, und
das Empfangsprozessdatenspeichermittel (8) geeignet ist, zu erlauben, dass Daten, die das interne Format aufweisen, durch das Empfangsdatenformatumwandlungsmittel (7) in das Empfangsprozessdatenspeichermittel (8) geschrieben werden, während es geeignet ist, das Auslesen von Daten aus dem Empfangsprozessdatenspeichermittel (8) durch das Empfangsdatenformatumwandlungsmittel (7) zu verhindern.

3. Netzwerksicherheitssystem nach Anspruch 1 oder 2, wobei das Empfangsprozessdatenspeichermittel (8) geeignet ist, Daten, die das interne Format aufweisen, zusätzlich mit einer vorbestimmten Zeitperiode in eine Datenbank (9) des Hostrechners (10) zu speichern.

4. Netzwerksicherheitssystem nach Anspruch 3, wobei das System geeignet ist, die Umwandlung, durch das Empfangsdatenformatumwandlungsmittel (7), von Daten mit dem externen Format in Daten mit dem internen Format und die zusätzliche Speicherung der Daten mit dem internen Format in der Datenbank (9) des Hostrechners (10) mit unabhängiger Zeitsteuerung und durch Stapelverarbeitung auszuführen.

5. Netzwerksicherheitssystem nach Anspruch 1 oder 2, wobei der Server (3) geeignet ist, Daten, die ein Mail-Format aufweisen, an das Empfangsdatenspeichermittel (6) zu senden und Daten mit dem externen Format zu schreiben.

6. Netzwerksicherheitssystem nach Anspruch 1, außerdem umfassend:
ein Sendeprozessdatenspeichermittel (14), um Daten zu speichern, die an das Netzwerk (1) gesendet werden;
ein Sendedatenformatumwandlungsmittel (13), um Daten mit dem internen Format, die im Sendeprozessdatenspeichermittel (14) gespeichert sind, in Daten mit dem externen Format umzuwandeln und sie im Sendedatenspeichermittel (12) zu speichern; wobei
der Server (3) geeignet ist, Daten, die das externe Format aufweisen und im Sendedatenspeichermittel (12) gespeichert sind, an das Netzwerk (1) zu senden.

7. Netzwerksicherheitssystem nach Anspruch 6, wobei:
das Sendeprozessdatenspeichermittel (14) geeignet ist, das Schreiben von Daten, die das interne Format aufweisen, durch den Hostrechner (10) in das Sendeprozessdatenspeichermittel (14) zu erlauben, während es geeignet ist, das Auslesen von Daten aus dem Sendeprozessdatenspeichermittel (14) durch den Hostrechner (10) zu verhindern, und
das Sendedatenspeichermittel (12) geeignet ist, das Auslesen von Daten, die der Server (3) zum Senden vorgesehen hat und die das externe Format aufweisen, aus dem Sendedatenspeichermittel (12) zu erlauben, während es geeignet ist, das Schreiben von Daten durch den Server (3) in das Sendedatenspeichermittel (12) zu verhindern.

8. Netzwerksicherheitssystem nach Anspruch 6 oder 7, wobei:
das Sendeprozessdatenspeichermittel (14) geeignet ist, das Auslesen von Daten, die das interne Format aufweisen, aus dem Sendeprozessdatenspeichermittel (14) durch das Sendedatenformatumwandlungsmittel (13) zu erlauben, während es geeignet ist, das Schreiben von Daten durch das Sendedatenformatumwandlungsmittel (13) in das Sendeprozessdatenspeichermittel (14) zu verhindern, und
das Sendedatenspeichermittel (12) geeignet ist, das Schreiben von Daten, die das externe Format aufweisen, durch das Sendedatenformatumwandlungsmittel (13) in das Sendedatenspeichermittel (12) zu erlauben, während es geeignet ist, das Auslesen von Daten aus dem Sendedatenspeichermittel (12) durch das Sendedatenformatumwandlungsmittel (13) zu verhindern.

9. Netzwerksicherheitssystem nach einem der Ansprüche 6 bis 8, wobei das System geeignet ist, die Umwandlung, durch das Sendedatenformatumwandlungsmittel (13), von Daten mit dem internen Format in Daten mit dem externen Format und die Speicherung, durch den Hostrechner (10), von Daten mit dem internen Format in das Sendeprozessdatenspeichermittel (14) mit unabhängiger Zeitsteuerung auszuführen.

10. Netzwerksicherheitssystem nach einem der Ansprüche 6 bis 8, wobei der Server (3) geeignet ist, Daten, die ein Mail-Format aufweisen, vom Sendedatenspeichermittel (12) zu empfangen und sie an das Netzwerk (1) zu senden.

11. Netzwerksicherheitssystem nach einem der Ansprüche 6 bis 8, wobei eine Datenbank (9) zum Hostrechner (10) gehört, und
das System geeignet ist:
die Umwandlung, durch das Empfangsdatenformatumwandlungsmittel (7), von Daten mit dem externen Format in Daten mit dem internen Format, die zusätzliche Speicherung der Daten mit dem internen Format in der Datenbank (9), die Umwandlung, durch das Sendedatenformatumwandlungsmittel (13), von Daten mit dem internen Format in Daten mit dem externen Format und
die Speicherung von Daten mit dem internen Format in das Sendeprozessdatenspeichermittel (14) jeweils durch den Hostrechner (10) mit unabhängiger Zeitsteuerung auszuführen.

12. Netzwerksicherheitssystem nach einem der vorherigen Ansprüche, wobei das Netzwerk (1) das Internet ist.

## Revendications

1. Système de sécurité de réseau comprenant :
un serveur (3) connecté à un réseau (1) ;
un moyen de stockage de données reçues (6) pour stocker des donnes qui sont reçues par le serveur (3) par l'intermédiaire du réseau (1), ces données ayant un format externe ;
un moyen de conversion de format de données reçues (7) pour convertir lesdites données à format externe stockées dans le moyen de stockage de données reçues (6) en données à format interne et pour les stocker dans un moyen de stockage de données de traitement reçues (8) ; et
un ordinateur hôte (10) pour exécuter un processus prédéterminé, qui utilise les données stockées dans le moyen de stockage de données de traitement reçues (8) et ayant le format interne,
ce système étant **caractérisé en ce que** :
le moyen de stockage de données reçues (6) est apte à recevoir l'inscription de données que le serveur (3) a reçues et qui ont le format externe, tout en étant apte à empêcher la lecture de données dans le moyen de stockage de données reçues (6) par le serveur (3) ;
le moyen de stockage de données de traitement reçues (8) est apte à permettre à l'ordinateur hôte (10) de lire des données qui ont le format interne dans le moyen de stockage de données de traitement reçues (8), tout en étant apte à empêcher l'inscription de données dans le moyen de stockage de données de traitement reçues (8) par l'ordinateur hôte (10) ; et que
le moyen de conversion de format de données reçues (7) est apte à convertir des données qui ont le format externe en données ayant un format de base de données.

2. Système de sécurité de réseau selon la revendication 1, ce système étant agencé de manière à ce que :
le moyen de stockage de données reçues (6) soit apte à permettre la lecture de données ayant le format externe dans le moyen de stockage de données reçues (6) par le moyen de conversion de format de données reçues (7), tout en étant apte à empêcher l'inscription de données dans le moyen de stockage de données reçues (6) par le moyen de conversion de format de données reçues (7) et que
le moyen de stockage de données de traitement reçues (8) est apte à permettre l'inscription de données ayant le format interne dans le moyen de stockage de données de traitement reçues (8) par le moyen de conversion de format de données reçues (7), tout en étant apte à empêcher la lecture de données dans le moyen de stockage de données de traitement reçues (8) par le moyen de conversion de format de données reçues (7).

3. Système de sécurité de réseau selon la revendication 1 ou la revendication 2, dans lequel le moyen de stockage de données de traitement reçues (8) est apte à stocker les données ayant le format interne avec en plus une durée prédéterminée dans une base de données (9) de l'ordinateur hôte (10).

4. Système de sécurité de réseau selon la revendication 3, dans lequel le système est apte à effectuer la conversion, par le moyen de conversion de format de données reçues (7), de données à format externe en données à format interne et le stockage additionnel des données à format interne dans la base de données (9) de l'ordinateur hôte (10) suivant une temporisation indépendante et par une méthode de traitement par lots.

5. Système de sécurité de réseau selon la revendication 1 ou la revendication 2, dans lequel le serveur (3) est apte à envoyer des données ayant un format courrier au moyen de stockage de données reçues (6) et à inscrire des données à format externe.

6. Système de sécurité de réseau selon la revendication 1, comprenant en outre :
un moyen de stockage de données de traitement de transmission (14) pour stocker les données envoyées au réseau (1) ;
un moyen de conversion de format de données de transmission (13) pour convertir les données à format interne stockées dans le moyen de stockage de données de traitement de transmission (14) en données à format externe et pour les stocker dans le moyen de stockage de données de transmission (12) ; tandis que
ledit serveur (3) est apte à envoyer des données qui ont le format externe et sont stockées dans le moyen de stockage de données de transmission (12) au réseau (1).

7. Système de sécurité de réseau selon la revendication 6, dans lequel :
le moyen de stockage de données de traitement de transmission (14) est apte à permettre l'inscription de données ayant le format interne dans le moyen de stockage de données de traitement de transmission (14) par l'ordinateur hôte (10), tout en étant apte à empêcher la lecture de données dans le moyen de stockage de données de traitement de transmission (14) par l'ordinateur hôte (10), et
le moyen de stockage de données de transmission (12) est apte à permettre la lecture de données que le serveur (3) est conçu pour envoyer et qui ont le format externe dans le moyen de stockage de données de transmission (12), tout en étant apte à empêcher l'inscription de données dans le moyen de stockage de données de transmission (12) par le serveur (3).

8. Système de sécurité de réseau selon la revendication 6 ou la revendication 7, dans lequel :
le moyen de stockage de données de traitement de transmission (14) est apte à permettre la lecture de données à format interne dans le moyen de stockage de données de traitement de transmission (14) par le moyen de conversion de format de données de transmission (13), tout en étant apte à empêcher l'inscription de données dans le moyen de stockage de données de traitement de transmission (14) par le moyen de conversion de format de données de transmission (13) et
le moyen de stockage de données de transmission (12) est apte à permettre l'inscription de données ayant le format externe dans le moyen de stockage de données de transmission (12) par le moyen de conversion de format de données de transmission (13), tout en étant apte à empêcher la lecture de données dans le moyen de stockage de données de transmission (12) par le moyen de conversion de format de données de transmission (13).

9. Système de sécurité de réseau selon l'une quelconque des revendications 6 à 8, dans lequel le système est apte à effectuer la conversion par le moyen de conversion de format de données de transmission (13) de données ayant le format interne en données ayant le format externe et le stockage, par l'ordinateur hôte (10), de données ayant le format interne dans le moyen de stockage de données de traitement de transmission (14) suivant une temporisation indépendante.

10. Système de sécurité de réseau selon l'une quelconque des revendications 6 à 8, dans lequel le serveur (3) est apte à recevoir des données ayant un format courrier du moyen de stockage de données de traitement de transmission (12) et à les envoyer au réseau (1).

11. Système de sécurité de réseau selon l'une quelconque des revendications 6 à 8, dans lequel
une base de données (9) est associée à l'ordinateur hôte (10) et
le système est adapté de manière à ce que :
la conversion, par le moyen de conversion de format de données reçues (7), de données ayant le format externe en données ayant le format interne, le stockage additionnel des données ayant le format interne dans la base de données (9), la conversion, par le moyen de conversion de format de données de transmission (13), des données ayant le format interne en données ayant le format externe et le stockage des données ayant le format interne dans le moyen de stockage de données de traitement de transmission (14) par l'ordinateur hôte (10) soient effectués chacun suivant une temporisation indépendante.

12. Système de sécurité de réseau selon l'une quelconque des revendications précédentes, dans lequel le réseau (1) est Internet.
